# EUROPEAN PATENT APPLICATION

(11) **EP 1 589 502 A1**
(43) Date of publication of application: **26.10.2005**
(21) Application number: 05008532.3
(22) Date of filing: 19.04.2005
(51) Int. Cl.: G07F 17/32, A63F 13/06

(54) **Gaming machine**

(30) Priority: 21.04.2004 JP 2004125053
(71) Applicant: Aruze Corp., Tokyo 135-0063 (JP)
(72) Inventor: Sato, Osamu, Tokyo 135-0063 (JP)
(74) Representative: Grünecker, Kinkeldey, Stockmair & Schwanhäusser Anwaltssozietät

(57) **Abstract**

The present invention provides a gaming machine which can obtain a position of a player's hand even with less machine power or processing ability. A gaming machine includes a game screen with which a player indicates a given position to a gaming machine with his/her hand, a sensor which detects the position which the hand of the player indicates by performing scanning above the game screen, a DVC which photographs the game screen and an image of the hand of the player and generates the whole image data, a position detecting unit which obtains a regional image data from the whole image data based on the position detected by the sensor and determines the position of the hand of the player by performing image processing of image data of the region, and a game control part which performs a control of the game based on the position detected by the position detecting unit.

## Description

### BACKGROUND OF THE INVENTION

### 1. FIELD OF THE INVENTION:

The present invention mainly relates to a gaming machine, and more particularly, for example, to a gaming machine which specifies a position of a player's hand and performs a control of a game based on this position.

### 2. RELATED ART:

With respect to a gaming machine which is installed in a game arcade or a gaming arena, recently, there has been observed the gaming arena which proposes a game performed by a plurality of players using the same game table simultaneously such as roulette, poker, bridge or baccarat. For example, there has been proposed a gaming machine in which a gaming screen is displayed on a large-size panel display which functions as a gaming table. In this gaming machine, players indicate desired position on the large-size panel display with their hands or the like and the gaming machine detects the indicated positions, and with these positions as input commands by players, advances the game.

As a technique which detects the positions indicated by the player, there has been disclosed a technique which detects a position of player's hands using an infrared ray sensor or a technique which detects the position of player's hands by performing an image processing of an image on a game table taken by a camera (For example, Japanese Patent Laid-open2003-325726) .

### Summary of the Invention

In the detecting method of the positions of the players' hands using the infrared ray sensor, a reflection amount and a reflection direction of the infrared rays which are reflected on the hand and return to the sensor vary depending on a portion of the hand on which the infrared rays impinge and hence, there has been a drawback that it is difficult to obtain the accurate positional information. Further, in the method which obtains the positional information by performing the image processing of the image on the game table taken by the camera, the information to be processed is increased corresponding to the increase of an area of the large-sized panel display and hence, the method requires larger amounts of machine power and processing ability to obtain the positional information.

Accordingly, it is an object of the present invention to provide a gaming machine which can obtain positions of player' s hands even with less machine power and processing ability.

The present invention has the following constitutional features as means to overcome the above-mentioned drawbacks.

The present invention proposes a gaming machine which allows a plurality of players to perform a game using the same game table simultaneously. The players perform the game at positions arranged around a game table (for example, a betting table of roulette, a baccarat table of baccarat) provided to the gaming machine.

According to the present invention, the gaming machine includes a game table means (a game screen) with which a player indicates a position to a gaming machine with his/her hand, a first position detecting means (a sensor) which detects the position which the hand of the player indicates by performing scanning above the game table means, a photographing means (DVC) which photographs the game table means and an image of the hand of the player and generates image data (total image data), a second position detecting means (position detecting unit) which specifies a region of the image data based on the position detected by the first position detecting means and determines the position of the hand of the player by performing image processing of image data of the region (region image data), and a control means (a game control part) which performs a control of the game based on the position detected by the second position detecting means.

According to the present invention, it is possible to detect the position by performing only a portion of the image data and hence, the position of the hand of the player can be obtained with a less machine power or processing ability.

### BRIEF DESCRIPTION OF THE DRAWINGS

Fig. 1 is a view showing a basic constitutional example of an image display system;
Fig. 2 is a view showing another basic constitutional example of the image display system;
Fig. 3 is a perspective view showing an appearance of a gaming machine which uses the image display system;
Fig. 4 is a view showing an arrangement example of an optical system which constitutes the image display system;
Fig. 5 is a block diagram showing an electric constitutional example of the gaming machine;
Fig. 6 is a view showing a screen example displayed on a front display;
Fig. 7 is a view showing a screen example displayed on a transmissive screen (a screen table) of the gaming machine;
Fig. 8 is a flowchart showing main operations of the gaming machine;
Fig. 9 is a flowchart showing an example of position detecting processing;
Fig. 10A is a view showing an example of the total image data; and
Fig. 10B is a view showing an example of region image data.

### DESCRIPTION OF THE PREFERRED EMBODIMENTS

Hereinafter, embodiments of the present invention are explained in conjunction with drawings.

### [First embodiment]

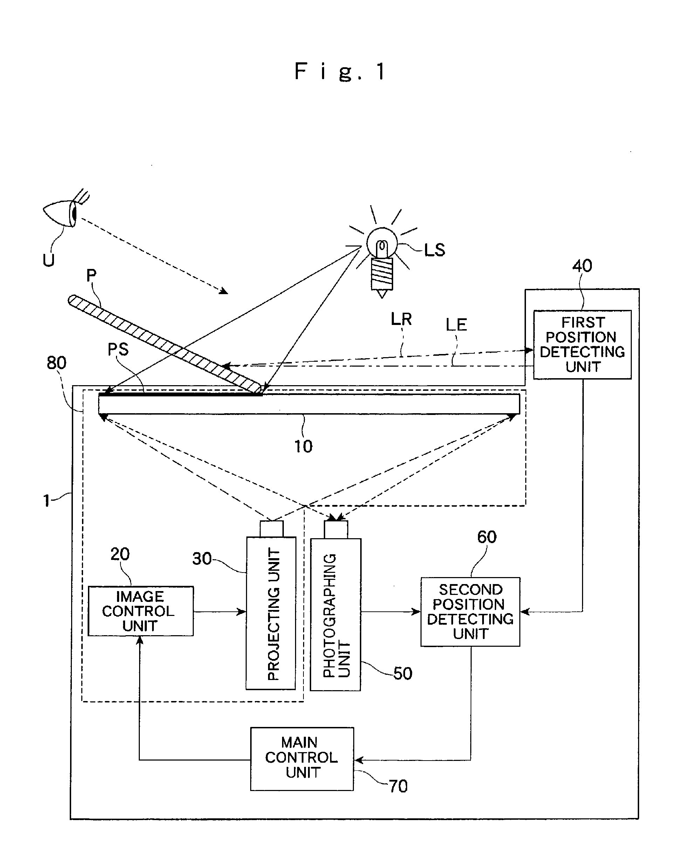

First of all, the first embodiment of the present invention according to the present invention is explained in conjunction with Fig. 1. Fig. 1 is a view showing a basic constitutional example of a gaming machine according to the first embodiment of the present invention.

The image display system 1 having a position detecting function includes a focusing unit 10, an image control unit 20, a projecting unit 30, a first position detecting unit 40, a photographing unit 50, a second position detecting unit 60, and a main control unit 70. Here, the image control unit 20 supplies image data. The projecting unit 30 projects images to a front surface of the focusing unit 10. The first position detecting unit 40 detects a position of an indicator P by emitting light LE along a surface of the focusing unit 10 and by receiving reflected light LR which is reflected on the indicator P which constitutes a position measuring object. The photographing unit 50 photographs the focusing unit 10 on which a shade PS of an indicator P is formed from a back surface of the focusing unit 10. The second position detecting unit 60 receives the position from the first position detecting unit 40, receives the image data on the back surface of the focusing unit 10 which is outputted from the photographing unit 50 and specifies a region of a portion of the image data based on the position from the first position detecting unit 40 and determines a position of the shade PS of the indicator P based on the specified region and outputs positional information. The main control unit 70 commands the image to be projected on the focusing unit 10 to the image control unit 20 based on the positional information from the second position detecting unit 60. The focusing unit 10, the projecting unit 20 and the image control unit 30 are cooperatively operated so as to function as an image display unit 80 which displays images of the game table to the players.

The focusing unit 10 has a light transmitting property and allows light from a front surface and a back surface thereof to pass therethrough. The focusing unit 10 is, for example, a transmissive screen for a liquid crystal projector. When a user U observes an focusing unit 10 from the front surface of the focusing unit 10, an optical image which is radiated from the back surface side of the focusing unit 10 by the projecting unit 20 is focused on the focusing unit 10. As a result, the user U can observe an image corresponding to the image data which the projecting unit 30 radiates.

The indicator P is an object or a means which the user uses for indicating a desired position of the image displayed on the front surface of the focusing unit 10 and is, for example, a hand (including an arm portion) of the user U himself/herself, an indicating rod or the like. The indicator P is illuminated by a light source LS and hence, a shade PS of the indicator P is reflected on the focusing unit 10. Since the focusing unit 10 has the light transmitting property, even when the focusing unit 10 is observed from a back surface thereof, the shade PS is observed. Here, the light source LS may be a lateral light source such as sunbeams or a lighting equipment which is provided in an environment in which the image display system 1 is arranged having a position detecting function. Further, the light source LS may be a lighting equipment such as a fluorescent lamp mounted in the image display system 1 having a position detecting function.

The projecting unit 30 is an optical projecting system which is capable of projecting an optical image to the focusing unit 10 based on the image data and is a liquid crystal projector (DLP (Digital Liquid Projector)), for example. The light source LS is preferably a light source which emits a white light. By allowing the white light to pass through the focusing unit 10, the shade PS of the indicator P is observed in black on the back surface of the focusing unit 10 and, at the same time, regions other than the shade PS are observed in white whereby an image equivalent to a white/black image can be obtained.

The first position detecting unit 40 emits light having directivity (emitted light) LE along a surface of the focusing unit 10 in a state that the first position detecting unit 40 scans the surface of the focusing unit 10 and receives the reflection light LR which returns upon reflection of the emitted light LE on the indicator P. The first position detecting unit 40 has a function of obtaining the direction and the distance of the indicator P with respect to the first position detecting unit 40, a function of obtaining the position of the indicator P from the direction and the distance, and a function of outputting the positional information based on the emitting direction of the emitted light and a light quantity of the reflection light LR. Here, it is sufficient that the positional information which the first position detecting unit 40 outputs is information having a level of accuracy which enables the specifying or the designation of an outline position of the indicator P.

The photographing unit 50 is a unit which generates the image data by photographing a back surface of the focusing unit 10 and is, for example, a digital camera, a digital video camera, a CCD camera unit, or the like.

The image control unit 20, the second position detecting unit 60, the main control unit 70 are respectively constituted of a device which includes an arithmetic processing device (CPU), a main memory (RAM), a read only memory (ROM), an input/output device (I/O), and an external storage device such as a hard disc device or the like when necessary. That is, these units may be formed of an information processing unit such as a computer, a workstation, an LSI chip or the like. In the above-mentioned ROM, the hard disc device or the like, a program which allows the information processing unit to function as the image control unit 20, the second position detecting unit 60 or the main control unit 70 is stored. By storing this program in the main memory and by allowing the CPU to execute this program, the image control unit 20, the second position detecting unit 60 or the main control unit 70 can be realized. Further, the above-mentioned program is not always necessary to be stored in the storage device in the inside of the information processing device may be provided from an external device (for example, an ASP (a server of an application service provider or the like) and may be stored in the main memory.

The image control unit 20, the second position detecting unit 60 and the main control unit 70 may be respectively realized by individual information processing device or one information processing device may be configured to function as the image control unit 20, the second position detecting unit 60 and the main control unit 70.

The image control unit 20 stores a plurality of image data to be displayed to the user, wherein the necessary image data is read out in response to a command from the main control unit 70 and is subjected to the image processing when necessary, and is provided to the projecting unit 30.

The second position detecting unit 60 receives the position detected by the first position detecting unit 40 (referred to as the outline positional information) as well as the image data of the back surface of the focusing unit 10 from the photographing unit 50, detects the position of the shade PS of the indicator P by specifying a partial region of the image data based on the outline positional information and performing the necessary image processing on the image data corresponding to the partial region (referred to as the regional image data), and outputs the detected position as the positional information. As the image processing, the threshold value processing for performing the region extracting of the shade PS, the edge detection for extracting a profile of the shade PS or the like is considered. The second position detecting unit 60 generates the positional information of the shade PS by making use of the coordinate positional information of pixels of a shade region or a profile line obtained by these threshold value processing or the edge detection.

The regional image data is a portion of the image data of the back surface of the focusing unit 10 (total image data) . The regional image data is considerably small amount of data compared to the total image data and hence, compared to a case inwhich the total image data is subjected to the image processing, it is possible to generate the positional information of the shade PS with the remarkably small processing amount.

The main control unit 70 has a function of controlling the operation of the whole image display system 1 having the position detection function, wherein the main control unit 70 instructs the image data to be outputted and the timing at which the image data is outputted or the like to the image control unit 20 and, at the same time, instructs the image control unit 20 to change the image data in response to the positional information of the shade PS from the second position detecting unit 60.

### [Modification of the first embodiment]

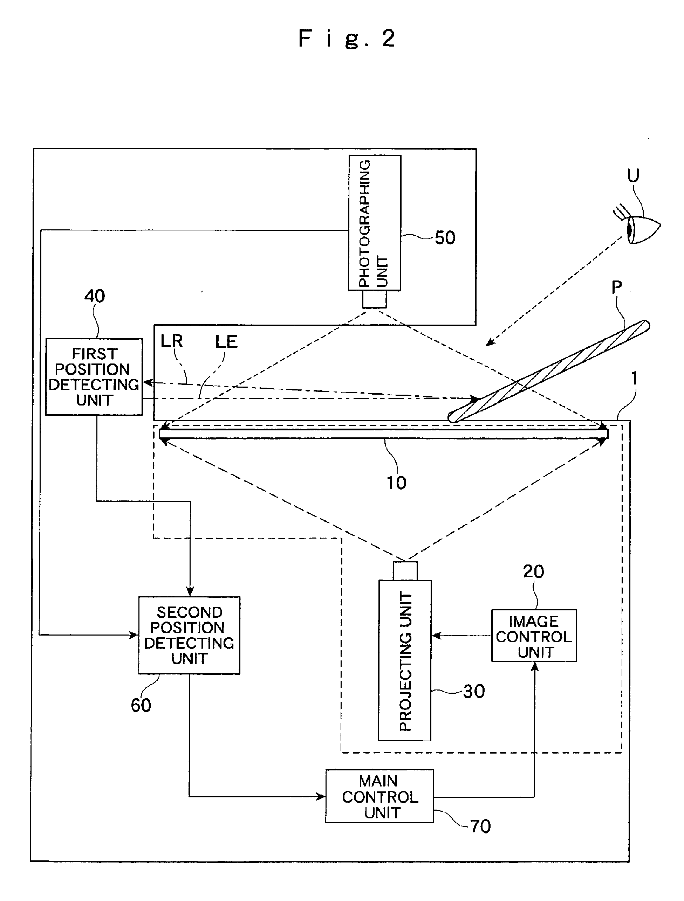

Fig. 2 shows a modification of the image display system 1 shown in Fig. 1. In the system shown in Fig. 1, the position of the indicator P is photographed from the lower side of the focusing unit 10 and the detection of the position is performed using the image which contains the shade PS of the indicator P. However, in the modification shown in Fig. 2, the photographing unit 50 is arranged above the focusing unit 10 and the detection of the position indicated by the player is performed by directly photographing the indicator P. That is, the image display system 1 having the position detecting function according to this modification is the constitution which performs the detection of the position using an actual image of the indicator P in place of the shade PS of the indicator P. It is also possible to realize the gaming machine according to the first embodiment with such a constitution.

According to the above-mentioned embodiment, in the gaming machine which allows the player to advance the game while indicating the betting position or the like on the table screen which constitutes one game table, it is possible to specify which positions the players bet.

Next, the examples according to the present invention are explained

### [First example]

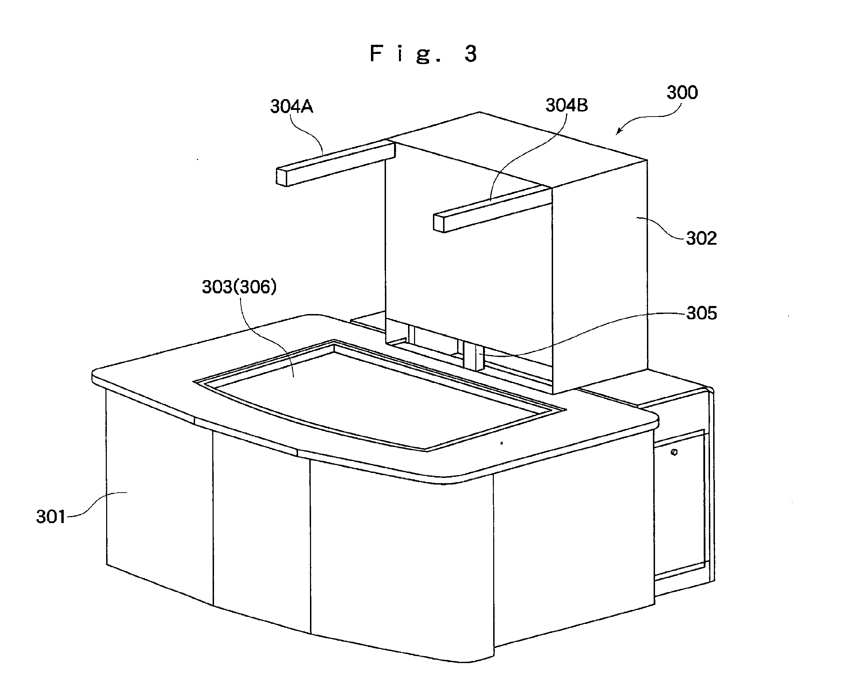

Fig. 3 is a perspective view of an appearance of a gaming machine which uses the image display system 1 having the position detecting function according to the present invention. Here, although the gaming machine is explained as a device which allows users to play a baccarat game, the gaming machine according to this example is not limited to the baccarat game. That is, the gaming machine according to this example is applicable to any game such as poker, black jack, bridge, roulette or the like so long as the image display system 1 according to the present invention is applicable.

The gaming machine 300 according to this example includes a table part 301 and a front display 302 which is mounted on a rear portion above the table part 301.

A table part 301 houses the optical system and information processing equipment which constitute the image display system 1 therein. An opening is formed in a center portion of an upper surface of the table part 301 and a transmissive screen 303 which constitutes the focusing unit 10 is extended over the opening. The transmissive screen 303 functions as an upper display (hereinafter referred to as "tablescreen306") which constitutes the image display unit which displays the game image to the users. Here, an upper portion of the transmissive screen 303 is protected by a transparent plate member such as a glass panel thus preventing the transmissive screen 303 from being broken or smeared even when the player touches the table screen 306 with his/her hand or the like which constitutes the indicator P.

Fluorescent lumps 304A, 304B which constitute the light sources LS are formed on both ends of an upper portion of the front display 302 and hence, the shade PS of the indicator P is projected on the transmissive screen 303. Here, the arrangement position of the fluorescent lumps 304A, 304B is not always limited to the mode shown in Fig. 3. That is, the fluorescent lumps 304A, 304B may be arranged at any position so long as the shade PS of the indicator P is projected on the transmissive screen 303. Further, when there is illumination which allows the shade PS of the indicator P to be projected on the transmissive screen 303 at locations where the gaming machine 300 is installed, the fluorescent lumps 304A, 304B may not be provided.

On a lower side of the center of the front monitor part 302, a sensor 305 which constitutes a first position detecting unit 40 is mounted. The sensor 305 is, for example, an obstacle detection photoelectric sensor (Hokuyo Electric Corporation, Osaka, PB9 series), a laser sensor or an infrared sensor. Here, the sensor is not limited to the above-mentioned arrangement positions and may be arranged at any position provided that the sensor 305 can emit a scanning light along the surface of the transmissive screen 303 and can perform scanning above the transmissive screen 303.

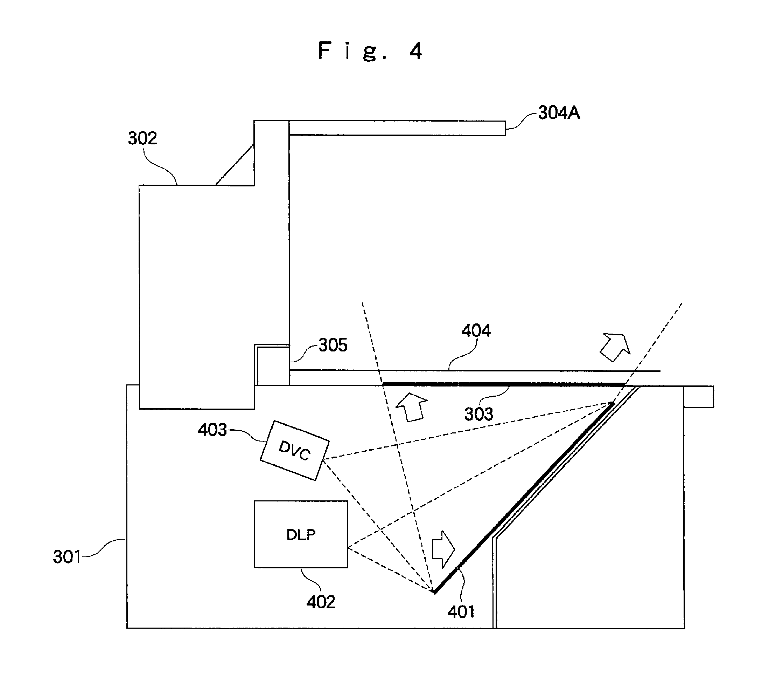

Fig. 4 is a view showing an arrangement example of the optical system which constitutes the image display system 1 housed in the inside of the table part 301.

To a center portion of the table part 301, the transmissive screen 303 is fixed in a state that the transmissive screen 303 is protected by a glass plate or the like. Amirror 401 is arranged in an inclined state below the transmissive screen 303. At a position which faces the mirror 401, a digital liquid crystal projector (hereinafter referred to as "DLP") 402 which corresponds to the projecting unit 20 and a digital video camera (DVC) 403 which constitutes the photographing means 40 are fixed. The mirror 401 reflects the image irradiated from the DLP 402 toward the transmissive screen 303 and the distance between the mirror 401 and the DLP 402 and an angle of a reflection surface are adjusted so as to project the image with a desired size. In the same manner, the mirror 401 is arranged in a state that the distance between the mirror 401 and the digital video camera 403 and an angle of a reflection surface with respect to the transmissive screen 303/the digital video camera 403 are adjusted so that the mirror 401 can reflect the image of the back surface of the transmissive screen 303 toward the digital video camera 403 and can photograph the back surface of the transparent screen 303. Further, on an upper surface of the table portion 301, the sensor 305 which can perform scanning above the transmissive screen 303 with a scanning beam 404 is arranged.

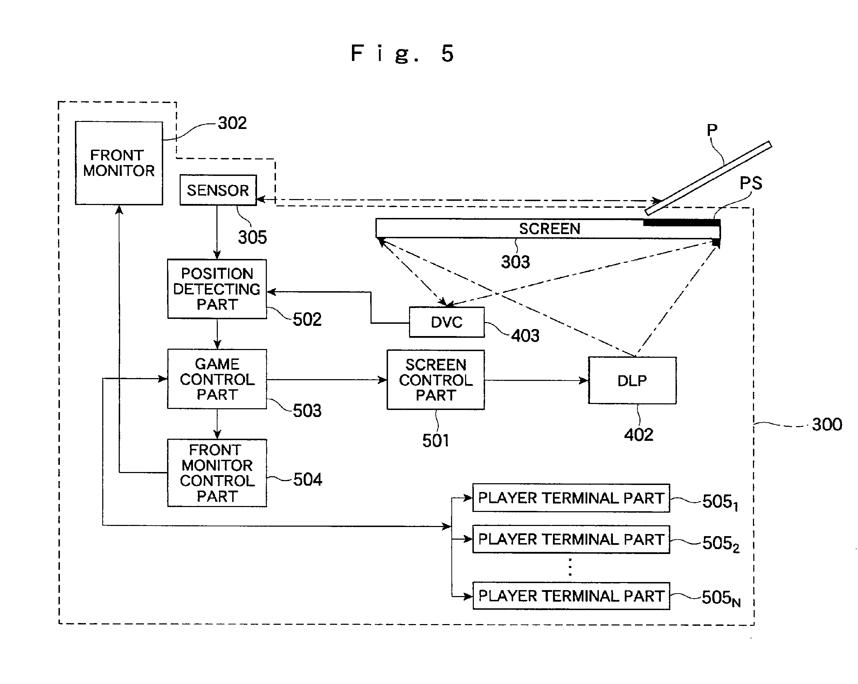

Next, an electrical constitutional example of the gaming machine 300 is explained in conjunction with Fig. 5. Fig. 5 is a block diagram showing the electrical constitutional example of the gaming machine 300.

As shown in Fig. 5, the gaming machine 300 is provided with the transmissive screen 303. The DLP 402 which constitutes the projecting unit 30 optically projects the image related to the game to the transmissive screen 303. A screen control part 501 which constitutes the image control unit 20 supplies the image data (hereinafter referred to as "front surface image data") to the DLP 402. The digital video camera (DVC) 403 which constitutes the photographing unit 50 photographs the back surface of the transmissive screen 303 and outputs image data obtained by photographing the back surface of the transmissive screen 303 (hereinafter being referred to as "back surface image data").

The transmissive screen 303, the screen control part 501 and the DLP 402 constitute the table screen 306 which is the image display means 80. The sensor 305 which constitutes the first position detecting unit 40 detects the position indicated by the indicator P and outputs the outline positional information.

A position detecting part 502 which constitutes the second position detecting unit 60 can detect the position indicated by the indicator P by receiving the outline positional information from the sensor 305 and the whole screen image data from the DVC 403, by generating the regional image data from the whole screen image data based on the outline positional information, and by processing the regional image data and outputs the positional information. The game control part 503 which constitutes the whole control unit 70 has a function of controlling the operation of the gaming machine 300. The game control part 503 instructs which display data is to be outputted to the screen control part 501 and at which timing the image data is outputted. At the same time, the game control part 503 receives the positional information from the position detecting part 502 and. The operation of the gaming machine 300 is controlled based on this positional information.

The front monitor control part 504 outputs image data of the image to be displayed on the front monitor 302 (hereinafter referred to as "front image data") in response to the instruction from the game control part 502. The front monitor 302 receives and displays the front image data. The image displayed on the front monitor 302 informs, in cooperation with the image displayed on the transmissive screen 303, that is, the table screen 306, the situation, the progress and the like of the game to the users.

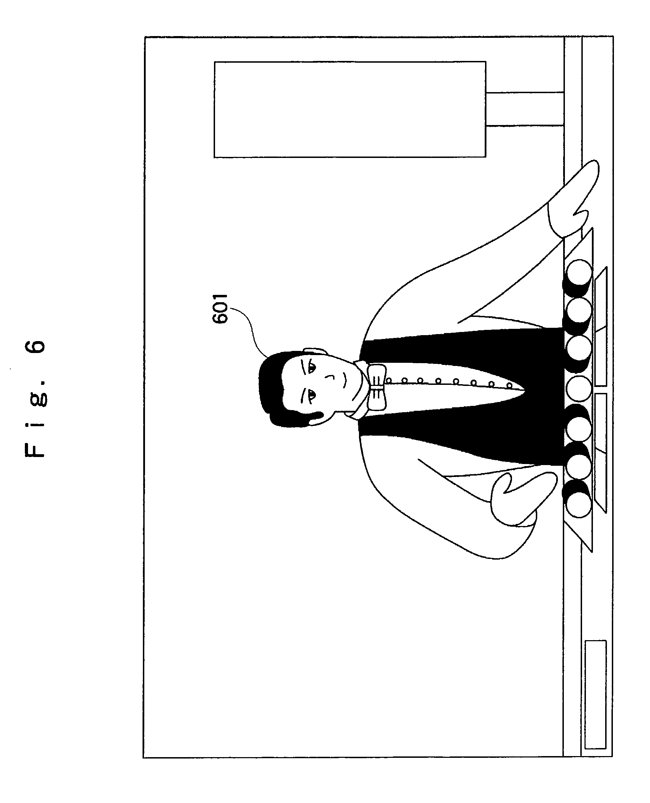

In this example, a dealer of a baccarat is displayed as a moving image on the front monitor 302. Fig. 6 is a screen example displayed on the front monitor 302. On the screen, the dealer 601 is displayed. That is, the mode in which the dealer distributes cards, draws cards and delivers chips in accordance with the progress of the game is displayed on the screen and hence, it is possible to obtain an effect as if the player is actually playing the baccarat game with an actual dealer.

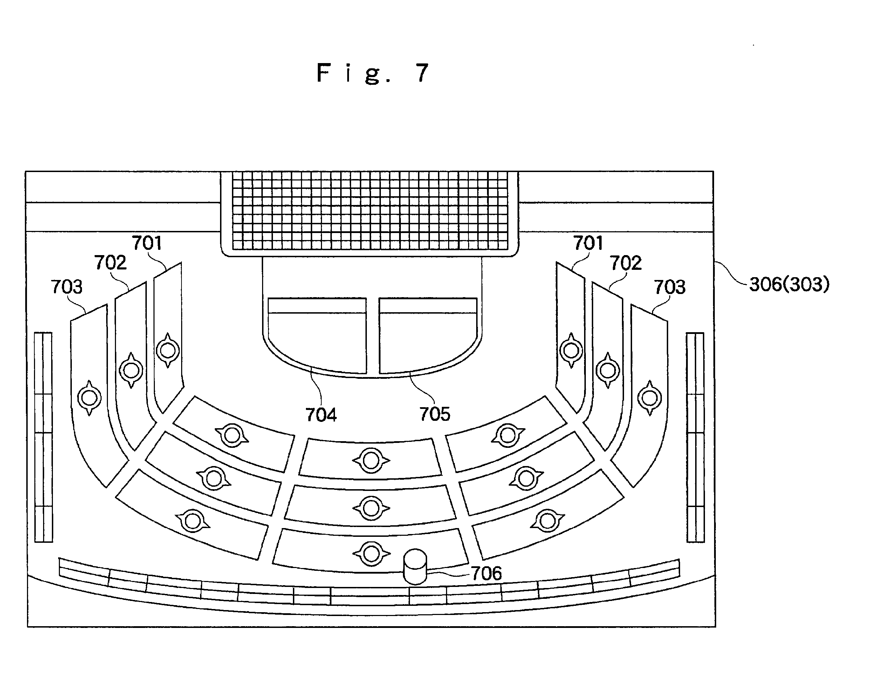

Next, a screen example displayed on the table screen 306 (transmissive screen 303) is explained. Fig. 7 is a screen example displayed on the table screen 306 of the gaming machine 300. In this example, an image which imitates a baccarat table is displayed on the table screen 306. On the baccarat table illustrated in the example, regions 701, 702, 703 for betting to "TIE", "BANKER", "PLAYER", are displayed for five respective players. By allowing the player to indicate any one of the regions 701, 702, 703 using his/her hand which constitutes the indicator P or the like, the information on which one of the "TIE", "BANKER", "PLAYER" the player bets is inputted to the gaming machine 300. Here, the number of chips, an amount of money and the number of credits for betting can be decided by the player using a betting button of a player terminal part 505 described later. A pile of chips 706 which eachplayer possesses can be also displayed on the table screen 306. When the player instructs his/her betting to any one of the "TIE", "BANKER", "PLAYER", using the indicator P, the image is changed to allow the table screen 306 to perform the display in which the number of chips which are bet are moved to any one of the regions 701, 702, 703 which are designated by the indicator P from a pile of chips 706 in front of the player.

Further, the table screen 306 includes regions 704, 705 where the dealer distributes cards to BANKER and PLAYER and images of cards which are distributed to BANKER and PLAYER are displayed in these regions 704, 705.

Returning back to Fig. 5, the electrical constitutional example of the gaming machine 300 is further explained.

To the game control part 503, a plurality of player terminal parts 505₁ to 505_{N} are connected. Each player terminal part 505 which constitutes a player terminal unit is a terminal which receives coins, bills, prepaid cards, credit cards or the like and changes them to credits (coins/medals) which can be used in the gaming machine 300. The player terminal part 505 also has a function of paying out the credits which the player terminal part 505 possesses in response to the payout indication from the player at a point of time that the payout indication is made and a bet inputting function for determining the number of bets, an amount of money and the number of credits in the game. The player instructs the indication necessary for advancing the game to the gaming machine 300 using this player terminal part 505 and the indicator P.

### [Operational example of gaming machine]

Next, the operational example of the gaming machine 300 is explained.

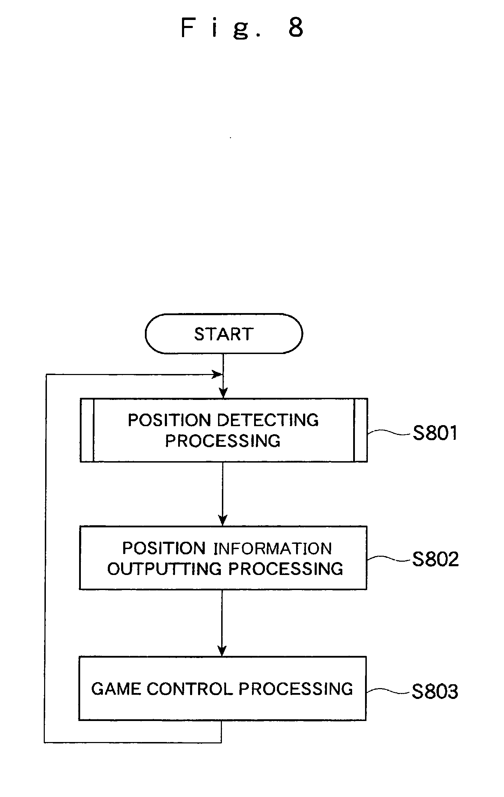

Fig. 8 is a flow chart showing the main operations of the gaming machine 300.

First of all, the gaming machine 300 performs the position detection processing for detecting the indication position indicated by the indicator P of the player (step S801).

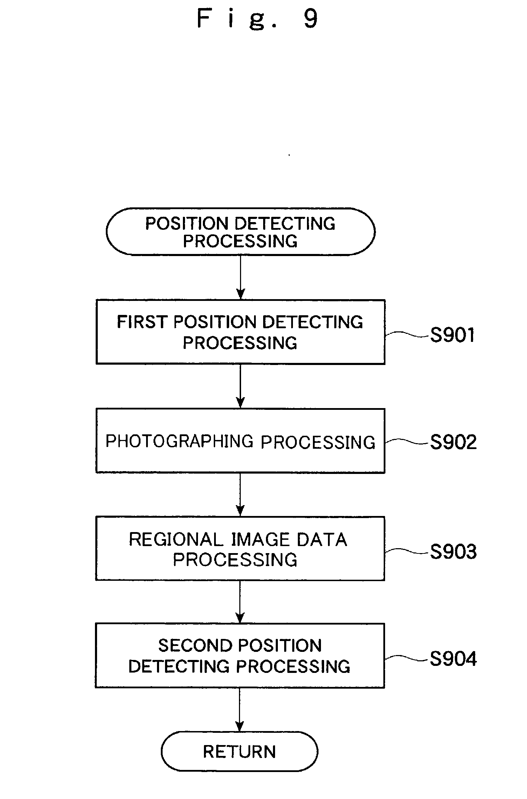

Fig. 9 is a flow chart showing a specific processing example of the position detecting processing (step S801). Hereinafter, specific processing example of the position detecting processing is explained in conjunction with Fig. 9.

First of all, the gaming machine 300 performs the first position detecting processing using the sensor 305 (step S901). The sensor 305 performs the scanning above the table screen 306 (transmissive screen 303) using the scanning beam, determines whether the reflection of the scanning beam exists, and measures the intensity and the light quantity of the reflection light when the reflection of the scanning beam exists, and performs the position calculation by specifying the direction and the distance. The sensor 305 outputs the calculated position to the position detecting part 502 as the outline position information (for example, the xy coordinates value). The first position detecting processingisfinishedin the above-mentioned manner.

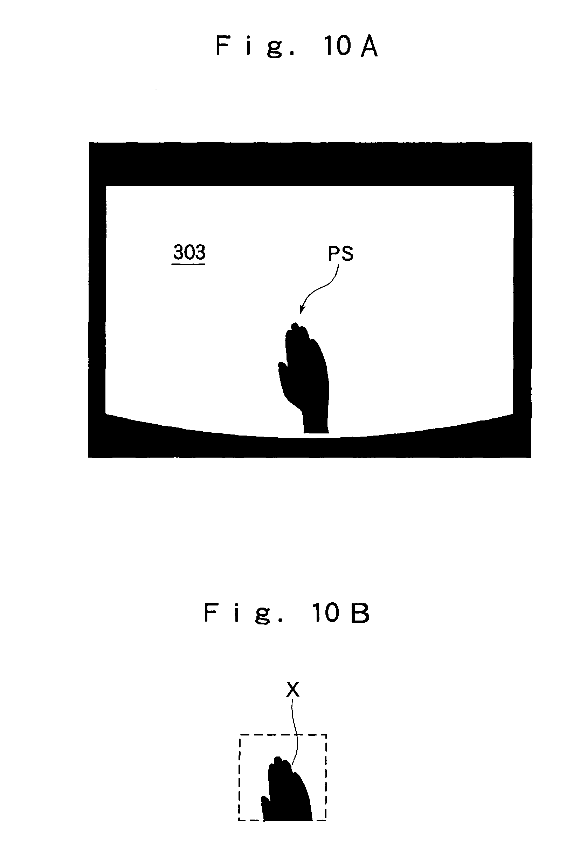

Next, the gaming machine 300 performs the photographing processing (step S902). That is, the DVC 403 photographs the back surface of the transmissive screen 303 by way of the mirror 301 and outputs the image as shown in Fig. 10A as the back surface image data which constitutes the whole image data to the position detecting unit 403.

Next, the gaming machine 300 performs the regional image data processing (step S903). That is, when the position detecting part 502 receives the outline positional information and the whole image data (back image data), the position detecting part 502 obtains the partial region as the regional image data from the whole image data based on the outline positional information. Fig. 10B is a view showing an example of the regional image data obtained from the whole image data shown in Fig. 10A. In this example, although a square region which has the center thereof on the coordinates X indicated by the outline positional information is treated as the regional image data, the regional image data may be determined based on other method. For example, the whole image data may be divided into a plurality of regions (for example, matrix formed of 16 pieces (4x4) of rectangular regions) and the divided regions including the coordinates X may be treated as the regional image data.

Next, the gaming machine 300 performs the second position detecting processing by performing the image processing of the regional image data (step S904). The position detecting part 502 performs the binarization processing of the regional image data. The thin portion such as the penumbra is subtracted from the shade PS of the indicator P by the binarization processing and the distal end portion of the indicator P is left and hence, it becomes clear which position the indicator P is indicating. In performing the binarization processing, a proper threshold value is set to enable the specifying of the distal end portion of the indicator P. Since the proper value of the threshold value is changed depending on the environment around the gaming machine 300 (brightness of the peripheral illumination or the like), an operation test may be performed after installing the gaming machine 300 so as to find out the proper threshold value.

Next, the position detecting part 502 performs the position detecting processing based on the back surface image data after the binarization processing. The position detecting part 502 obtains the coordinates value (x, y values) of pixels which have black values based on the regional image data after binarization processing and generates the positional information based on the obtained coordinate values. The positional information may be the coordinate value of the pixel which constitutes a peak of the distal end portion. Alternatively, an average value or a center value of the coordinate values of all pixels which possess black values may be selected. Upon execution of the above-mentioned controls, the positional detecting processing (step S801) is complete.

Returning back to Fig. 8, the explanation of the operational example of the gaming machine 300 is continued.

That is, the gaming machine 300 performs, upon completion of the position detecting processing, the positional information outputting processing (step S802). That is, the position detecting part 502 outputs the generated positional information to the game control part 503.

Next, the gaming machine 300 performs the game control processing based on the received positional information (step S803). That is, the game control part 503 performs the necessary game processing based on the received positional information. For example, the game control part 503 performs a control such that the game control part 503 determines the positional information as the designation of any one of the regions 701, 702, 703 for betting to "TIE", "BANKER", "PLAYER", and performs a control such that the designated chip images are displayed in the inside of the region.

As described above, it is possible to realize the gaming machine 300 which uses the transmissive screen 303 which constitutes the focusing unit 10 capable of functioning as the image display unit and the input unit simultaneously.

To recapitulate other constitutional features of the present invention, the gaming machine is configured to include the player terminal means which is arranged to indicate the position of the player. Here, the player terminal means is the manipulation terminal which has a function of allowing the player to input the number of bets to the gaming machine, for example.

Further, the gaming machine includes a projecting means (DLP) which projects the image, the screen means (the transmissive screen) which focuses the image projected by the projecting means and to which the shade of the indicator which indicates a given position of the image is projected, a first position detecting means (a sensor) which detects the position indicated by the indicator by performing scanning above the screen means, the photographing means (DVC) which photographs a back surface of the screenmeans and outputs image data including the shade of the indicator (total image data), the secondposition detecting means which specifies a given region of the image data based on the position detected by the first position detecting means and outputs the position indicated by the indicator by performing image processing of image data of the region (region image data), and the control means (a game control part) which performs the control of the game based on the position detected by the second position detecting means.

Although the present invention has been explained in conjunction with several embodiments, the present invention is not limited to the gaming machine and is applicable to all devices and systems which perform the reception of inputting of the users by making use of the image display and the displayed image such as the image display system for presentation, the demonstration device for promoting sales and the like.

## Claims

1. A gaming machine which specifies a position of a hand of a player and performs a control of a game based on the position, the gaming machine comprising:
a game table means with which a player indicates a position to a gaming machine with his/her hand;
a first position detecting means which detects the position which the hand of the player indicates by performing scanning above the game table means;
a photographing means which photographs the game table means and an image of the hand of the player and generates image data;
a secondposition detectingmeans which specif ies a region of the image data based on the position detected by the first position detecting means and determines the position of the hand of the player by performing image processing of image data of the region; and
a control means which performs a control of the game based on the position detected by the second position detecting means.

2. A gaming machine according to claim 1, wherein the gaming machine further includes a player terminal means which receives an input of the number of bets from the player and the game table means displays an image corresponding to the number of bets at the positioned detected by the second position detecting means.

3. A gaming machine comprising:
a projecting means which projects an image:
a screen means which focuses the image projected by the projecting means and to which a shade of an indicator which indicates a position of the image is projected;
a first position detecting means which detects the position indicated by the indicator by scanning above the screen means;
a photographing means which photographs a back surface of the screen means and outputs image data including the shade of the indicator;
a second position detecting means which specifies a region of the image data based on the position detected by the first position detecting means and determines the position indicated by the indicator by performing image processing of image data of the region; and
a control means which performs a control of the game based on the position detected by the second position detecting means.
